Europäisches Patentamt

European Patent Office

Office européen des brevets

(11) Veröffentlichungsnummer: **0 513 531 A1**

# EUROPÄISCHE PATENTANMELDUNG

(21) Anmeldenummer: **92106302.0**

(22) Anmeldetag: **11.04.92**

(51) Int. Cl.5: **H01M 10/42**, H01M 10/12, H01M 2/02

(30) Priorität: **16.05.91 DE 4115941**

(43) Veröffentlichungstag der Anmeldung:
**19.11.92 Patentblatt 92/47**

(84) Benannte Vertragsstaaten:
**DE ES FR**

(71) Anmelder: **ROBERT BOSCH GMBH**
**Postfach 30 02 20**
**W-7000 Stuttgart 30(DE)**

(72) Erfinder: **Häbich, Andreas, Dr. Dipl.-Chem.**
**Blumenstrasse 65**
**W-7016 Gerlingen(DE)**
Erfinder: **Bauer, Jürgen, Dr. Dipl.-Chem.**
**Sensburger Ring 57**
**W-3200 Hildesheim(DE)**
Erfinder: **Richter, Gerolf, Dr. Dipl.-Ing.**
**An der Innerste Au 7**
**W-3200 Hildesheim(DE)**
Erfinder: **Ziegler, Bodo, Dipl.-Ing.**
**Paul-Lincke-Strasse 24**
**W-7000 Stuttgart 1(DE)**

(54) **Akkumulatoren-Batterie für Kraftfahrzeuge.**

(57) Beschrieben wird eine Akkumulatoren-Batterie (10) für Kraftfahrzeuge, insbesondere Bleiakkumulatoren-Batterie, in Blockbauweise, die sich aus einem ersten, dem Startvorgang des Kraftfahrzeugs dienenden Bereich (11) und einem zweiten, der Zündung, der Beleuchtung und anderen Verbrauchern des Kraftfahrzeugs dienenden Bereich (12) zusammensetzt. Der erste Bereich (11) und der zweite Bereich (12), die bevorzugt jeweils eine Nennspannung von 12 Volt haben, sind aufeinander angeordnet und haben eine Gesamthöhe (H), die im wesentlichen der Gesamthöhe einer herkömmlichen Akkumulatoren-Batterie für Kraftfahrzeuge entspricht. Die beiden Bereiche (11, 12) sind bevorzugt deckungsgleich aufeinander angeordnet und können jeweils dem Anwendungszweck angepaßte technische Werte aufweisen. Die beiden Bereiche (11, 12) sind fest miteinander verbunden.

FIG.1

Die Erfindung geht aus von einer Akkumulatoren-Batterie für Kraftfahrzeuge nach der Gattung des Hauptanspruchs, wie sie prinzipiell aus der US-PS 4 883 728 bekannt ist. Bei der Akkumulatoren-Batterie gemäß dieser US-PS 4 883 728 ist ein erster mehrzelliger Bereich für den Startvorgang des Kraftfahrzeugs und ein zweiter mehrzelliger Bereich für die elektrische Versorgung der Zündung, der Beleuchtung und andere Verbraucher des Kraftfahrzeuges vorgesehen; diese beiden Bereiche der Akkumulatoren-Batterie sind in Blockbauweise nebeneinander angeordnet und benötigen gemeinsam eine relativ große Grundfläche.

Weiterhin ist es bekannt (DE-GM 1 901 724) mehrere zu einem Verband zusammengefaßte Akkumulatoren-Batterien übereinander anzuordnen, um für verschiedene Anwendungszwecke die benötigten unterschiedlichen Spannungen oder Kapazitäten zur Verfügung zu haben; diese übereinander angeordneten, mittels Distanzstücken und Klammern verbundenen Akkumulatoren-Batterien haben dabei jedoch eine relativ große Gesamtbauhöhe.

Der Erfindung liegt demgegenüber die Aufgabe zugrunde, eine Akkumulatoren-Batterie für Kraftfahrzeuge zu entwickeln, die bekannterweise einen Bereich für den Startvorgang und einen zweiten Bereich für die Zündung, die Beleuchtung und andere Verbraucher eines Kraftfahrzeugs hat, darüber hinaus jedoch bei herkömmlicher (genormter) Gesamtbauhöhe im Vergleich zur in der US-PS 4 883 728 beschriebenen Akkumulatoren-Batterie einen verringerten Bedarf an Grundfläche hat; es soll dabei aber dennoch gewährleistet sein, daß die Akkumulatoren-Batterie auch bei kalter Umgebungstemperatur genügend hohe elektrische Ströme für den Startvorgang zur Verfügung stellen kann. Als weitere Vorteile der erfindungsgemäßen Akkumulatoren-Batterie sind anzusehen, daß 1) der Ausschuß von Bauteilen (Gitter, Elektrodenplatten, Gehäuseteile, Separatoren) anläßlich der Herstellung dieser Akkumulatoren-Batterien verringert wird, 2) die unerwünschte Schichtung des in herkömmlichen Akkumulatoren-Batterien enthaltenen Elektrolyten merklich reduziert wird (bewirkt eine verbesserte Zyklenfestigkeit von Akkumulatoren-Batterien mit PbCa-Gitterlegierungen, insbesondere bei Systemen mit festgelegtem Elektrolyten), 3) Verwerfungen von Gehäuse-Seitenwänden herkömmlicher Dicke infolge von Druckdifferenzen zwischen dem Innenraum von gasdichten Akkumulatoren-Batterien und der Umgebungsluft nahezu ausgeschlossen werden, 4) eine Gewichtsersparnis der Akkumulatoren-Batterie im Bereich für den Startvorgang erzielt wird und 5) viele der vorhandenen, für herkömmliche Akkumulatoren-Batterien verwendete Fertigungseinrichtungen auch für die erfindungsgemäße Akkumulatoren-Batterie, gegebenenfalls mit geringen Veränderungen, verwendbar sind.

Durch die in den Unteransprüchen aufgeführten Maßnahmen sind vorteilhafte Weiterbildungen und Verbesserungen der im Hauptanspruch angegebenen Akkumulatoren-Batterie möglich. Besonders vorteilhaft ist es, daß die beiden unterschiedlichen Bereiche der Akkumulatoren-Batterie dem jeweiligen Anwendungszweck entsprechend in ihrer Höhe variiert, sogar ihre Nennspannungen, Kapazitäten u. a. angepaßt werden können. Sofern einer oder beide Bereiche der Akkumulatoren-Batterie nicht gasdicht ausgebildet ist/sind, können bei diesen auch an sich bekannte, im Blockdeckel integrierte Entgasungssysteme Verwendung finden, wobei sich deren Auslaßöffnungen bevorzugterweise an den Seitenwänden des jeweiligen Gehäuse-Bereiches befinden. Die Verbindung der beiden Bereiche der Akkumulatoren-Batterie erfolgt vorzugsweise durch Schweißen bzw. Anschmelzen.

Ausführungsbeispiele der Erfindung sind in der Zeichnung dargestellt und in der nachfolgenden Beschreibung näher erläutert. Es zeigen in verkleinerter Darstellung die Figuren 1 (Vorderansicht), Figur 2 (Seitenansicht) und Figur 3 (Draufsicht) ein erstes Ausführungsbeispiel der erfindungsgemäßen Akkumulatoren-Batterie für Kraftfahrzeuge (beide Bereiche der Akkumulatoren-Batterie haben gleiche Bauhöhe), Figur 4 in vergrößerter Darstellung einen Teilschnitt durch eine Ausführungsform einer Vorfixierung für den oberen mit dem unteren Bereich der Akkumulatoren-Batterie, die Figuren 5 (Seitenansicht) und 6 (Draufsicht) eine in verkleinerter Darstellung gezeigte zweite Ausführungsform einer Akkumulatoren-Batterie (mit seitlichen Anschlußpolen), die Figur 7 in verkleinerter Darstellung eine dritte Ausführungsform der Akkumulatoren-Batterie (unterschiedliche Höhen der beiden Bereiche der Akkumulatoren-Batterie, sowie mit Anschlußpolen, die beim oberen Bereich auf der Oberseite angeordnet sind und am unteren Bereich aus einer Seitenwand austreten) und die Figuren 8 (Vorderansicht) und 9 (Draufsicht) eine vierte Ausführungsform einer verkleinert dargestellten Akkumulatoren-Batterie, wobei deren beide Bereiche unterschiedliche Höhe haben und der obere Bereich eine geringere Nennspannung als der untere Bereich hat.

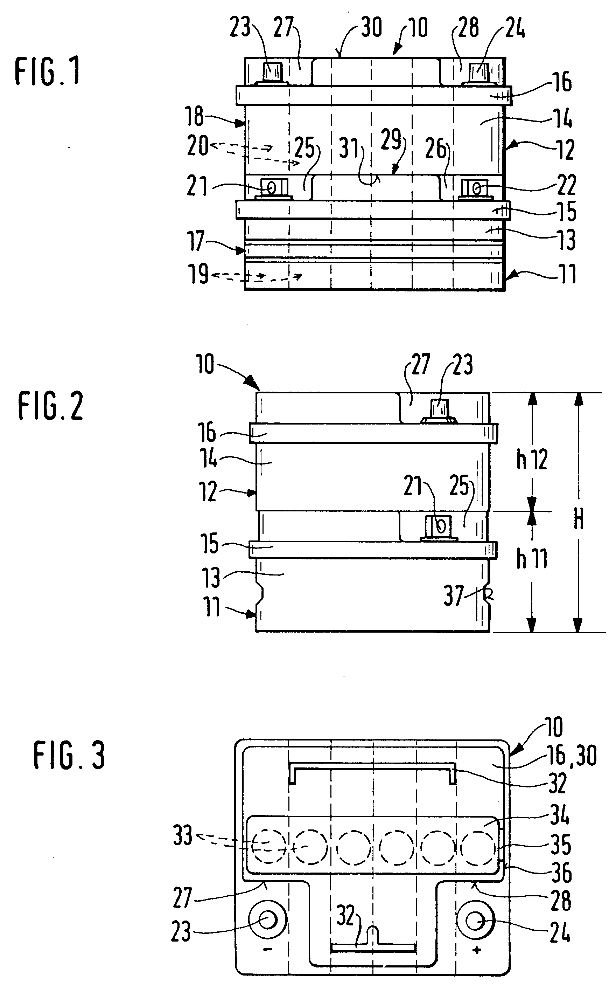

Die als erstes Ausführungsbeispiel in den Figuren 1 bis 3 dargestellte Akkumulatoren-Batterie 10 für Kraftfahrzeuge setzt sich aus einem unteren Bereich 11 und einem oberen Bereich 12 zusammen. Jeder dieser beiden Bereiche 11 bzw. 12 hat einen Blockkasten 13 bzw. 14 und einen Blockdeckel 15 bzw. 16, die jeweils dicht und fest mittels eines bekannten Verfahrens (Schweißen, Verschmelzen o. ä.) verbunden sind. Der Blockkasten 13 und der Blockdeckel 15 des unteren Bereiches 11 der Akkumulatoren-Batterie 10 bilden den Gehäuse-Bereich 17. Der Blockkasten 14 und der Blockdeckel 16 des oberen Bereiches 12 der Akkumulatoren-Batterie 10 bilden hingegen den Gehäuse-Bereich 18. Jeder dieser beiden Gehäuse-Bereiche 17 bzw. 18 enthält eine Anzahl Zellengefäße 19 bzw. 20; im vorliegenden Ausführungsbeispiel hat der untere Bereich 11 der Akkumulatoren-Batterie 10 sechs Zellengefäße 19 und der obere Bereich 12 dieser Akkumulatoren-Batterie 10 ebenfalls sechs Zellengefäße 20. Diese Zellengefäße 19, 20 enthalten in bekannter Form (nicht dargestellte) Plattenblöcke, die sich abwechselnd aus negativen Elektroden, Separatoren und positiven Elektroden zusammensetzen, und die Plattenblöcke umgebenden Elektrolyten. Bei der in Kraftfahrzeugen üblicherweise verwendeten Bleiakkumulatoren-Batterie wird in zumeist üblichen, gitterförmigen Masseträgern als elektrochemisch aktive Masse für die negativen Elektroden hochporöses Blei und für die positiven Elektroden Bleidioxid verwendet; als Elektrolyt dient verdünnte Schwefelsäure, die entweder flüssig oder auch angedickt (festgelegt) sein kann. Jede dieser Zellen der Bleiakkumulatoren-Batterie 10 hat eine Nennspannung von 2 Volt, die bei Ladung ansteigt und bei Belastung sinkt. Die zugehörigen, aus Blei bestehenden Platten- und Zellenverbinder sind sowohl im unteren Gehäuse-Bereich 17 als auch im oberen Gehäuse-Bereich 18 in bekannter Weise enthalten, jedoch nicht dargestellt. Im unteren Bereich 11 der Akkumulatoren-Batterie 10 ragen nach oben aus dem Blockdeckel 15 ein für einen Schraubanschluß vorgesehenes, negatives Anschlußelement 21 und ein ebensolches positives Anschlußelement 22 in bekannter Weise heraus. Ebenso ragen aus dem Blockdeckel 16 des oberen Bereiches 12 der Akkumulatoren-Batterie 10 ein zapfenförmiges, negatives Anschlußelement 23 und ein zapfenförmiges, positives Anschlußelement 24 heraus. Diese Anschlußelemente 21 bis 24 sind jeweils in einer Einbuchtung 25 bis 28 des jeweiligen Blockdeckels 15 bzw. 16 angeordnet und ragen in ihrer Höhe in bekannter Weise nicht über die Oberseite 29 bzw. 30 ihres Blockdeckels 15 bzw. 16 hinaus. Infolge der Reihenschaltung der im unteren Bereich 11 der Akkumulatoren-Batterie 10 befindlichen Zellengefäße 19 mit ihren Plattenblökken ergibt sich somit eine elektrische Spannung von 12 Volt zwischen den Anschlußelementen 21 und 22 und ebenso verhält es sich im oberen Bereich 12 der Akkumulatoren-Batterie 10, so daß auch zwischen den Anschlußelementen 23 und 24 eine elektrische Spannung von 12 Volt gegeben ist.

Der obere Bereich 12 dieser Akkumulatoren-Batterie 10 ist mit seinem Boden 31 auf der Oberseite 29 des unteren Bereichs 11 der Akkumulatoren-Batterie 10 festgelegt und dabei sind diese beiden Bereiche 11 und 12 der Akkumulatoren-Batterie 10 deckungsgleich aufeinander angeordnet. Zur Vorfixierung der beiden Bereiche 11 und 12 können in die Oberseite 29 des Blockdeckels 15 Vertiefungen 32 mit eingeformt sein, in welche im Boden 31 des oberen Blockkastens 14 befindliche (nicht dargestellte) Erhebungen entsprechend hineinzuragen vermögen. Derartige Vertiefungen 32 sind im vorliegenden Ausführungsbeispiel (Figur 3) zur Vermeidung zusätzlicher Blockdeckel-Typen sowohl auf der Oberseite 29 des Blockdeckels 16 als auch auf der Oberseite 29 des Blockdeckels 15 mit eingeformt. Die Verbindung des oberen Blockkastens 14 mit dem unteren Blockdeckel 15 erfolgt bevorzugterweise durch Schweißen bzw. Zusammenschmelzen, kann aber auch durch Kleben und sogar auch mittels (nicht dargestellter) lösbarer Verbindungsmittel (Schraubverbindung, Nietverbindung, Verkeilung in entsprechenden Schwalbenschwanznuten oder sonstiger bekannter Haltemittel) erfolgen.

In dem in den Figuren 1 bis 3 dargestellten Ausführungsbeispielen ist der Blockdeckel 16 des oberen Bereiches 12 der Akkumulatoren-Batterie 10 mit einem nicht im Detail gezeigten, an sich bekannten Entgasungssystem versehen, von dem die Zellengefäß-Gasauslaßöffnungen 33 gestrichelt angedeutet sind, die Verschlußkappe 34 des Entgasungssystem dargestellt und die Auslaßöffnung des Entgasungssystems mit 35 bezeichnet ist.

Der untere Bereich 11 dieser Akkumulatoren-Batterie 10 ist im vorliegenden Beispiel als gasdichte Bleiakkumulatoren-Batterie 10 ausgebildet und besitzt kein Entgasungssystem, wie es zum oberen Bereich 12 der Akkumulatoren-Batterie 10 beschrieben wurde; derartige gasdichte Akkumulatoren-Batterien besitzen bevorzugterweise ein (nicht dargestelltes) Überdruckventil, können jedoch bei entsprechender Ausbildung der Plattenblöcke auch ohne ein solches Überdruckventil auskommen. Gasauslaßöffnungen 35 bzw. Überdruckventile werden bevorzugt derart angeordnet, so daß sie an einer Seitenwand 36 der Blockdeckel 15, 16 austreten.

Erfindungsgemäß ist die Gesamthöhe H dieser beiden aufeinander angeordneten Bereiche 11 und 12 derart bemessen, so daß sie gemeinsam im wesentlichen der Gesamthöhe herkömmlicher Akkumulatoren-Batterien für Kraftfahrzeuge entspricht; die Höhe des unteren Bereiches 11 der Akkumulatoren-Batterie 10 ist dabei mit $h_{11}$ und die des oberen Bereichs 12 mit $h_{12}$ bezeichnet. Im vorliegenden Ausführungsbeispiel sind die Höhen $h_{11}$ un $h_{12}$ gleich groß.

Der untere Bereich 11 der Akkumulatoren-Batterie 10 ist für die Versorgung der Zündung, der Beleuchtung und anderer Verbraucher des Kraftfahrzeugs mit elektrischen Strom vorgesehen und ist bevorzugterweise mit festgelegtem Elektrolyten ausgestattet. Der obere Bereich 12 dieser Akkumulatoren-Batterie 10 ist hingegen allein für die Versorgung des nicht dargestellten Kraftfahrzeug-Startermotors mit elektrischem Strom vorgesehen und enthält bevorzugterweise flüssigen Elektrolyten, der elektrochemisch schneller zu reagieren vermag, und enthält zumeist sehr dünne Elektrodenplatten, denen besonders hohe elektrische Ströme entnommen werden können.

In den Blockkasten 13 des unteren Bereiches 11 dieser Akkumulatoren-Batterie 10 sind seitlich Bodenleisten 37 mit eingeformt, die zur Festlegung der Akkumulatoren-Batterie 10 in bekannter Weise in Kraftfahrzeugen Verwendung finden.

Je nach Anwendungsfall ist es wählbar, ob der dem Startvorgang des Kraftfahrzeugs dienende Bereich 11 bzw. 12 der Akkumulatoren-Batterie 10 oben oder unten angeordnet ist. Infolge der geringeren Höhe der Zellengefäße 19 bzw. 20 dieser Akkumulatoren-Batterie 10 im Vergleich zu herkömmlichen Akkumulatoren-Batterien, deren Höhe ja doppelt so hoch ist wie die Höhen h11 und h12 der hier beschriebenen Akkumulatoren-Batterie 10, wird anläßlich der Herstellung der erfindungsgemäßen Akkumulatoren-Batterien weniger Ausschuß an Bauteilen (Gitter, Elektrodenplatten, Gehäuseteile, Separatoren) verursacht, es wird außerdem die unerwünschte Schichtung des in der Akkumulatoren-Batterie enthaltenen flüssigen Elektrolyten merklich reduziert und bei gasdichten Akkumulatoren-Batterien werden nennenswerte Verwerfungen von Gehäuse-Seitenwänden herkömmlicher Dicke nahezu ausgeschlossen, wenn Druckdifferenzen zwischen dem Innenraum dieser Batterien und der Umgebungsluft auftreten; für diese erfindungsgemäße Akkumulatoren-Batterie können für herkömmliche Akkumulatoren-Batterien verwendete Fertigungseinrichtungen, gegebenenfalls mit geringen Veränderungen, verwendet werden.

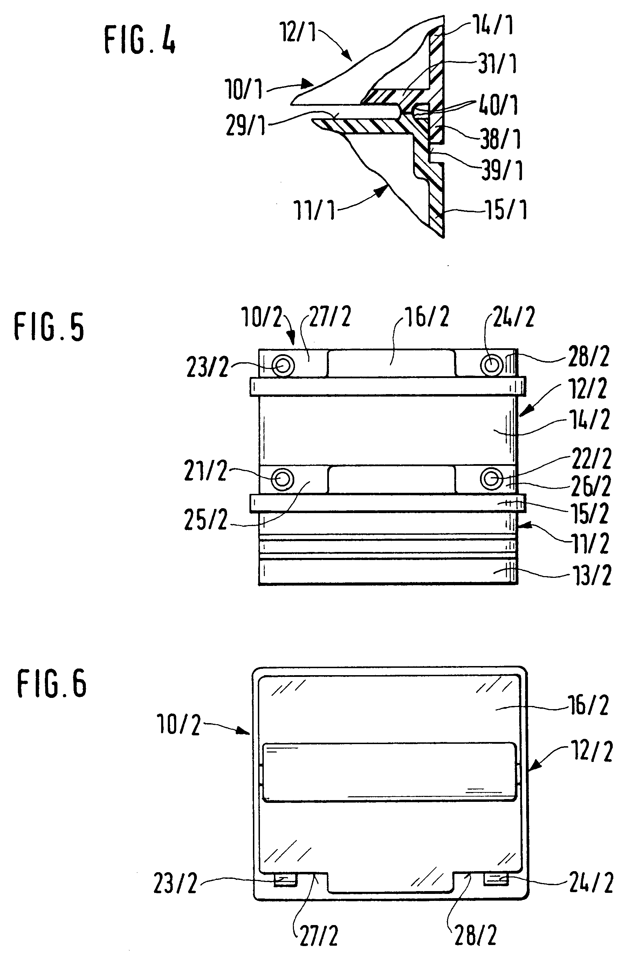

In der Figur 4 ist die bevorzugte Ausführungsform einer Vorfixierung zwischen einem Blockkasten 14/1 eines oberen Bereiches 12/1 und einem Blockdeckel 15/1 eines unteren Bereiches 11/1 einer Akkumulatoren-Batterie 10/1 ausschnittsweise dargestellt. Der Boden 31/1 des genannten Blockkastens 14/1 ist dazu mit einem nach unten weisenden Vorfixierungsrand 38/1 versehen, der den Blockdeckel 15/1 des unteren Bereiches 11/1 fixierend seitlich umfaßt; es genügt, wenn der Vorfixierungsrand 38/1 den Blockdeckel 15/1 nur teilweise seitlich umfaßt. Bevorzugterweise ist der Blockdeckel 15/1 des unteren Bereiches 11/1 mit einem seitlichen Rücksprung 39/1 versehen, infolge dem dann der Blockkasten 14/1 des oberen Bereiches 12/1 mit dem Blockdeckel 15/1 des unteren Bereiches 11/1 senkrecht fluchtet. Bei Anwendung eines Anschmelzverfahrens zwischen dem oberen Bereich 12/1 und dem unteren Bereich 11/1 dieser Ausführungsform einer Akkumulatoren-Batterie 10/1 ist es zweckmäßig, wenn die Unterseite des Bodens 31/1 des oberen Blockkastens 14/1 und/oder die Oberseite 29/1 des Blockdeckels 15/1 des unteren Bereiches 11/1 mit einzelnen und/oder mehreren Schweißvorsprüngen 40/1 ausgestattet sind.

In den Figuren 5 und 6 ist als zweite Ausführungsform eine Akkumulatoren-Batterie 10/2 dargestellt, bei der sowohl im unteren Bereich 11/2 als auch im oberen Bereich 12/2 im jeweiligen Blockdeckel 15/2 bzw. 16/2 seitliche Anschlußelemente 21/2 bis 24/2 vorhanden sind. Diese Anschlußelemente 21/2 bis 24/2 sind jeweils in einer Einbuchtung 25/2 bis 28/2 des jeweiligen Blockdeckels 15/2 bzw. 16/2 angeordnet. Im übrigen entspricht diese Akkumulatoren-Batterie 10/2 der Akkumulatoren-Batterie 10 gemäß der Figuren 1 bis 3. Je nach Anwendungsfall können sowohl in der Form als auch in der Lage verschiedene Anschlußelemente 21 bis 24, 21/2 bis 24/2 gemäß dem ersten Ausführungsbeispiel (Figuren 1 bis 3) bzw. dem zweiten Ausführungsbeispiel (Figuren 5, 6) Verwendung finden; während beispielsweise die Anschlußelemente eines unteren Bereiches einer erfindungsgemäßen Akkumulatoren-Batterie zur einen Seite weisen, können dabei bei Bedarf die Anschlußelemente des oberen Bereiches einer solchen Akkumulatoren-Batterie zur Rückseite hinausragen oder auch nach oben weisen.

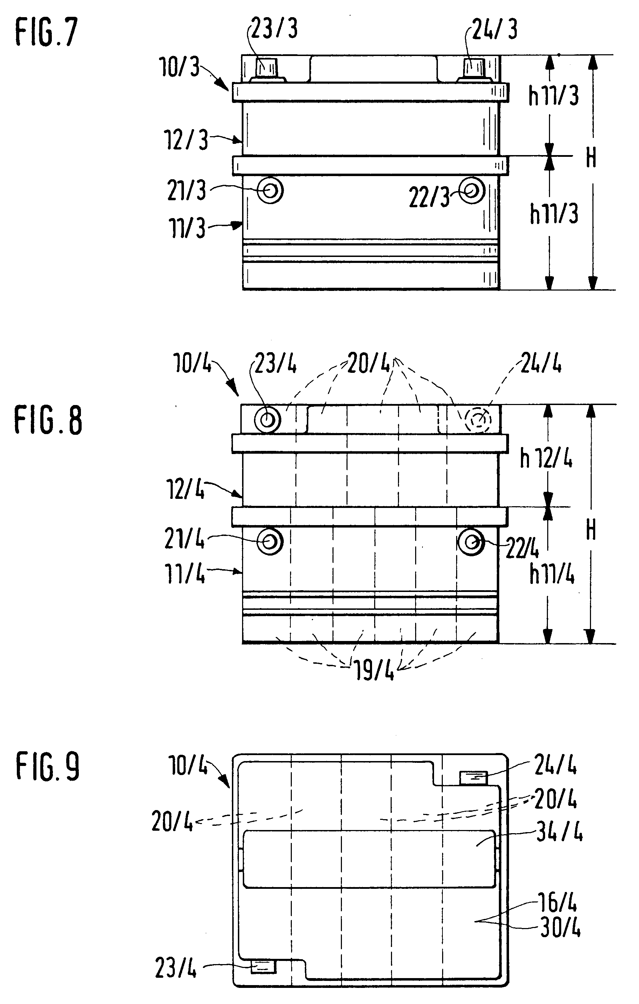

In der Figur 7 ist eine dritte Ausführungsform einer erfindungsgemäßen Akkumulatoren-Batterie 10/3 dargestellt: Die Gesamthöhe H dieser Akkumulatoren-Batterie 10/3 entspricht wieder der Gesamthöhe einer herkömmlichen Akkumulatoren-Batterie für Kraftfahrzeuge, die Höhen h11/3 und h12/3 des unteren Bereiches 11/3 bzw. des oberen Bereiches 12/3 dieser Akkumulatoren-Batterie 10/3 sind jedoch unterschiedlich; im vorliegenden Ausführungsbeispiel ist der obere Bereich 12/3 niedriger als der untere Bereich 11/3. Der obere Bereich 12/3 könnte im vorliegenden Ausführungsbeispiel zum Starten des Kraftfahrzeuges Verwendung finden und deshalb mit besonders dünnen Elektrodenplatten versehen sein; bei diesen Akkumulatoren-Batterien 10 bis 10/3 hat sich gezeigt, daß infolge der niedrigeren Elektrodenplatten und dem demzufolge geringeren elektrischen Widerstand erheblich bessere (Kälte-)Hochstromentladungen möglich sind als es bei herkömmlichen Akkumulatoren-Batterien für Kraftfahrzeuge der Fall ist. Aufgrund dieser die Hochstromentladung betreffenden günstigen Eigenschaften ist es möglich, den dem Startvorgang eines Kraftfahrzeugs dienenden Bereich der erfindungsgemäßen Akkumulatoren-Batterien 10 bis 10/3 kleiner und demzufolge leichter auszulegen, was dem der Zündung, der Beleuchtung und anderen Verbrauchern dienenden Bereich kapazitäts- und/oder größenmäßig zugute kommen kann. Der untere Bereich 11/3 dieser Akkumulatoren-Batterie 10/3 könnte eine gasdichte Ausführung sein, sie könnte auch mit einem Rekombinationskatalysator zur Umwandlung der beim Ladevorgang entstehenden Gase zu Wasser versehen sein; dieser untere Bereich 11/3, der der Zündung, Beleuchtung und anderen Verbrauchern dienen soll, kann relativ dicke Elektrodenplatten enthalten, da er nur relativ kleine Ströme liefern muß.

Der obere Bereich 12/3 dieser Akkumulatoren-Batterie 10/3 ist mit nach oben weisenden, sich verjüngenden Anschlußelementen 23/3 bzw. 24/3 (Polzapfen) versehen, der untere Bereich 11/3 hat hingegen seitliche Anschlußelemente 21/3 und 22/3.

In den Figuren 8 und 9 ist eine vierte Ausführungsform der erfindungsgemäßen Akkumulatoren-Batterie 10/4 dargestellt: Auch bei dieser Akkumulatoren-Batterie 10/4 sind die Höhen h11/4 und h12/4 des unteren Bereiches 11/4 bzw. des oberen Bereiches 12/4 unterschiedlich wie bei dem Ausführungsbeispiel gemäß Figur 7, während die Gesamtbauhöhe H dieser Akkumulatoren-Batterie 10/4 wieder der Gesamtbauhöhe einer herkömmlichen (genormten) Akkulatoren-Batterie für Kraftfahrzeuge entspricht. Der wesentliche Unterschied dieser Akkumulatoren-Batterie 10/4 gegenüber den vorstehenden Ausführungsbeispielen liegt darin, daß der obere Bereich 12/4 dieser Akkumulatoren-Batterie 10/4 anstelle von sechs Zellengefäßen nur fünf Zellengefäße 20/4 hat; der untere Bereich 11/4 dieser Akkumulatoren-Batterie 10/4 besitzt wie die Akkumulatoren-Batterien 10 bis 10/3 ebenfalls sechs Zellengefäße 19/4. Aufgrund dessen, daß der obere Bereich 12/4, der in diesem Ausführungsbeispiel für das Starten des Kraftfahrzeug-Motors vorgesehen ist, nur fünf Zellengefäße 20/4 aufweist, ist beim Laden der Akkumulatoren-Batterie 10/4 mittels einem beiden Bereichen 11/4, 12/4 gemeinsamen Ladegerät gewährleistet, daß dieser obere Bereich 12/4 mit an Sicherheit grenzender Wahrscheinlichkeit immer voll geladen ist. Da der für den Startvorgang des Kraftfahrzeug-Motors vorgesehene obere Bereich 12/4 bevorzugt mit flüssigem Elektrolyten (nicht dargestellt) gefüllt ist, kann es zweckmäßig sein, daß die Verschlußkappe 34/4 auf der Oberseite 30/4 des oberen Blockdeckels 16/4 abnehmbar ausgebildet ist, um bei Bedarf wieder Flüssigkeit in die Zellengefäße 20/4 nachfüllen zu können.

Die Anschlußelemente 21/4 bis 24/4 sind seitlich an dieser Akkumulatoren-Batterie 10/4 angeordnet, beim oberen Bereich 12/4 könnten sie im Bedarfsfalle aber auch nach oben weisend sein. Während bei den dritten und vierten Ausführungsbeispielen entsprechend der Figuren 7 bzw. 8 und 9 jeweils die oberen Bereiche 12/3 bzw. 12/4 niedriger ausgebildet wurden als ihre unteren Bereiche 11/3 bzw. 11/4 kann die Anordnung aber auch umgekehrt sein, d. h., daß der niedrigere Bereich der Akkumulatoren-Batterie 10/3 bzw. 10/4 unten ist, sofern das für den Anwendungszweck vorteilhafter ist.

Für die Bemessung einer erfindungsgemäßen Akkumulatoren-Batterie 10 bis 10/4 ist es zumeist zweckmäßig, wenn vorzugsweise auch die (genormte) Breite der herkömmlichen Akkumulatoren-Batterien für Kraftfahrzeuge beibehalten wird und lediglich die Länge dieser Ausführungsformen variiert wird. Sofern es für den Anwendungszweck sinnvoll ist, kann der obere Bereich 12 bis 12/4 in der Länge kürzer gehalten werden, so daß beidseitig ein seitlicher Rückstand des oberen Bereiches 12 bis 12/4 gegenüber dem unteren Bereich 11 bis 11/4 vorhanden ist (z. B. für das Anbringen von seitlichen, nicht dargestellten Tragbügeln). Traggriffe (nicht dargestellt) für eine erfindungsgemäße Akkumulatoren-Batterie 10 bis 10/4 können aber auch auf der Oberseite 30 des Blockdeckels 16 angeordnet sein, wobei diese im eingeklappten Zustand mit der Oberseite 30 des Blockdeckels 16 bündig abschließen sollten.

Ergänzend sei hinzugefügt, daß die Anschlußelemente 21 bis 24 der vorstehend beschriebenen Ausführungsbeispiele von Akkumulatoren-Batterien 10 bis 10/4 aber auch derart angeordnet sein können, so daß sich das negative Anschlußelement des unteren Bereiches 11 unterhalb des positiven Anschlußelementes des oberen Bereiches 12 befindet; es können aber auch andere an sich bekannte Kombinationen je nach Anwendungsfall Verwendung finden.

**Patentansprüche**

1. Akkumulatoren-Batterie (10) für Kraftfahrzeuge, insbesondere Bleiakkumulatoren-Batterie, in Blockbauweise, mit einem ersten, dem Startvorgang des Kraftfahrzeugs dienenden Bereich (11) und einem zweiten, der Zündung, der Beleuchtung und anderen Verbrauchern des Kraftfahrzeugs dienendem Bereich (12), dadurch gekennzeichnet, daß der erste Bereich (11) und der zweite Bereiche (12) der Akkumulatoren-Batterie (10) selbstragend aufeinander angeordnet sind und daß dabei die Gesamthöhe (H) der Akkumulatoren-Batterie (10) im wesentlichen der Gesamthöhe herkömmlicher Akkumulatoren-Batterien für Kraftfahrzeuge entspricht.

2. Akkumulatoren-Batterie nach Anspruch 1, dadurch gekennzeichnet, daß ihre beiden Bereiche (11, 12) deckungsgleich aufeinander angeordnet sind.

3. Akkumulatoren-Batterie nach einem der Ansprüche 1 oder 2, dadurch gekennzeichnet, daß mindestens einer ihrer beiden Bereiche (11, 12) an seinem Blockdeckel (15, 16) ein an sich bekanntes Entgasungssystem besitzt.

4. Akkumulatoren-Batterie nach Anspruch 3, dadurch gekennzeichnet, daß die Auslaßöffnungen (35) des Entgasungssystems seitlich am jeweiligen Blockdeckel (15, 16) angeordnet sind.

5. Akkumulatoren-Batterie nach einem der Ansprüche 1 bis 4, dadurch gekennzeichnet, daß die Höhen (h11, h12) ihrer beiden Bereiche (11, 12) gleich sind.

6. Akkumulatoren-Batterie nach einem der Ansprüche 1 bis 4, dadurch gekennzeichnet, daß die Höhen (h11/3, h12/3) ihrer beiden Bereiche (11/3, 12/3) unterschiedlich sind.

7. Akkumulatoren-Batterie nach einem der Ansprüche 1 bis 6, dadurch gekennzeichnet, daß die Anzahl der Zellengefäße (19, 20) ihrer beiden Bereiche (11, 12) gleich ist.

8. Akkumulatoren-Batterie nach einem der Ansprüche 1 bis 6, dadurch gekennzeichnet, daß die Anzahl der Zellengefäße (19/4, 20/4) ihrer beiden Bereiche (11/4, 12/4) unterschiedlich ist.

9. Akkumulatoren-Batterie nach einem der Ansprüche 1 bis 8, dadurch gekennzeichnet, daß jeder ihrer beiden Bereiche (11, 12)) mit eigenen positiven und negativen Anschlußelementen (21 bis 24) versehen ist.

10. Akkumulatoren-Batterie nach Anspruch 9, dadurch gekennzeichnet, daß die Anschlußelemente (21 bis 24) nach oben weisen und/oder sich als seitliche Anschlußelemente (21/2 bis 24/2) am jeweiligen Bereich (11, 12; 11/2, 12/2) befinden und bevorzugt in Einbuchtungen (25 bis 28; 25/2 bis 28/2) im Blockdeckel (15, 16; 15/2, 16/2) angeordnet sind.

11. Akkumulatoren-Batterie nach einem der Ansprüche 1 bis 10, dadurch gekennzeichnet daß die Bodenfläche (31, 31/1) des oberen Bereiches (12, 12/1) und die Oberseite (29, 29/1) des unteren Bereiches (11, 11/1) mit Erhebungen (38/1) und/oder Vertiefungen (32) zur Vorfixierung beider Bereiche (11, 12; 11/1, 12/1) versehen ist.

12. Akkumulatoren-Batterie nach einem der Ansprüche 1 bis 11, dadurch gekennzeichnet, daß der obere Bereich (12) mit dem unteren Bereich (11) durch Schweißen, Anschmelzen o. ä. fest verbunden ist.

FIG.1

FIG.2

FIG.3

FIG. 4

FIG.5

FIG.6

FIG.7

FIG.8

FIG.9

9

Europäisches Patentamt

EUROPÄISCHER RECHERCHENBERICHT

Nummer der Anmeldung

EP    92 10 6302

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | PATENT ABSTRACTS OF JAPAN<br>vol. 7, no. 45 (E-160)(1190) 23. Februar 1983<br>& JP-A-57 197 751 ( NIPPON DENSO K.K. )<br>* Zusammenfassung *<br>--- | 1 | H01M10/42<br>H01M10/12<br>H01M2/02 |
| Y | US-A-4 684 580 (SCOTT L. CRAMER)<br>*WHOLE DOCUMENT*<br>--- | 1 | |
| A | GB-A-719 335 (OLDHAM & SON LIMITED)<br>* Seite 2, Zeile 10 - Zeile 19 *<br>--- | 1 | |
| A | US-A-3 933 522 (HANS STEIG)<br>*WHOLE DOCUMENT*<br>--- | 1-3 | |
| D,A | US-A-4 883 728 (PITA WITEHIRA)<br>*WHOLE DOCUMENT*<br>----- | 1 | |

| | RECHERCHIERTE SACHGEBIETE (Int. Cl.5) |
|---|---|
| | H01M |

Der vorliegende Recherchenbericht wurde für alle Patentansprüche erstellt

| Recherchenort | Abschlußdatum der Recherche | Prüfer |
|---|---|---|
| DEN HAAG | 02 SEPTEMBER 1992 | DE VOS L.A. |